## Europäisches Patentamt
## European Patent Office
## Office européen des brevets

(19)

(11) Veröffentlichungsnummer: **0 005 206**
**B1**

(12)

# EUROPÄISCHE PATENTSCHRIFT

(45) Veröffentlichungstag der Patentschrift: **01.04.81**

(51) Int. Cl.³: **C 07 C 101/80, C 09 B 1/22**

(21) Anmeldenummer: **79101158.8**

(22) Anmeldetag: **17.04.79**

(54) Verfahren zur Herstellung von 1,4-Diaminoanthrachinon-2-carbonsäure.

(30) Priorität: **28.04.78 CH 4649/78**

(43) Veröffentlichungstag der Anmeldung:
**14.11.79 Patentblatt 79/23**

(45) Bekanntmachung des Hinweises auf die Patenterteilung:
**01.04.81 Patentblatt 81/13**

(84) Benannte Vertragsstaaten:
**CH DE FR GB**

(56) Entgegenhaltungen:
**DE - A - 2 541 800**
**FR - A - 2 242 370**

**DERWENT JAPANESE PATENTS REPORT, Vol. 6,
Nr. 47, 4. Januar 1968,
Derwent Publications, London
NIPPON KAYAKU: "Dyeing hydrophobic
materials", Sektion 2, Seite 2, Nr. 24539/67**

(73) Patentinhaber: **CIBA-GEIGY AG
Patentabteilung Postfach
CH-4002 Basel (CH)**

(72) Erfinder: **Tzikas, Athanassios, Dr.
Muttenzerstrasse 78
CH-4133 Pratteln (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Verfahren zur Herstellung von 1,4-Diaminoanthrachinon-2-carbonsäure

Gegenstand der Erfindung ist ein Verfahren zur Herstellung von 1,4-Diaminoanthrachinon-2-carbonsäure, das dadurch gekennzeichnet ist, dass man 1-Nitroanthrachinon-2-carbonsäure oder -carbonsäurederivate mit Hydroxylamin oder Hydroxylaminderivaten in Alkohol-Wasser-Mischungen bei basischen pH-Werten umsetzt und das Verfahrensprodukt in an sich bekannten Weise abtrennt.

Als Ausgangsverbindungen des erfindungsgemässen Verfahrens können beispielsweise die folgenden genannt werden: 1-Nitroanthrachinon-2-carbonsäure und -carbonsäurederivate, insbesondere -carbonsäureester und -carbonsäureamide, z.B. 1-Nitroanthrachinon-2-carbonsäureäthylester, 1-Nitro-2-carbamoylanthrachinon, 1-Nitro-2-N-methylcarbamoylanthrachinon, 1-Nitro-2-N-äthylcarbamoylanthrachinon, 1-Nitro-2-N,N-dimethylcarbamoylanthrachinon, 1-Nitro-2-N,N-diäthylcarbamoylanthrachinon.

Hydroxylamin und Hydroxylaminderivate, z.B. Hydroxylaminhydrochlorid, Hydroxylammoniumsulfat, Hydroxylaminsulfonsäure. Vorzugsweise verwendet man Hydroxylaminhydrochlorid.

Die erfindungsgemässe Umsetzung erfolgt in Alkohol-Wasser-Mischungen, als Alkohole kommen z.B. in Betracht: Methanol, Aethanol, Propanol, Isopropanol, n-Butanol, Isobutanol, Benzylalkohol. Das Mischungsverhältnis von Alkohol zu Wasser ist variabel. Vorzugsweise arbeitet man mit einem Ueberschuss an Wasser. Insbesondere nimmt man die Umsetzung in Methanol-Wasser- oder Aethanol-Wasser-Mischungen vor.

Die Umsetzung wird in basischem Medium, vorzugsweise in stark basischem Medium vorgenommen, z.B. bei pH-Werten von mindestens 10. Die Einstellung des pH-Wertes erfolgt vorzugsweise durch Zugabe von Alkalimetallhydroxid, insbesondere Natriumhydroxid oder Kaliumhydroxid.

Die Reaktionstemperatur kann in einem beliebigen mit den Reaktionsteilnehmern verträglichen Bereich variieren, vorzugsweise zwischen Raumtemperatur und Siedetemperatur des Reaktionsgemisches. Insbesondere ist es von Vorteil, die Umsetzung bei Raumtemperatur zu beginnen und durch Erhöhung bis in die Nähe des Siedebereichs zu vervollständigen. Als vorteilhafter Temperaturbereich für die erfindungsgemässe Umsetzung kommt etwa der Bereich von 0 bis 100°C in Betracht. Das Verfahrensprodukt wird auf an sich bekannte Weise aus der Reaktionsmischung abgetrennt. Das Verfahrensprodukt ist ein wertvolles Zwischenprodukt zur Herstellung von Küpenfarbstoffen, Pigmenten und Dispersionsfarbstoffen.

Das erfindungsgemässe Verfahren weist gegenüber dem vorbekannten Stand der Technik einen Vorteil auf. Die bekannten Herstellungsverfahren für die 1,4-Diaminoanthrachinon-2-carbonsäure beschreiben die Reduktion von 1-Amino-4-nitroanthrachinon-2-carbonsäure mit Hydrazin (FR—A 22 42 370) oder von 1,4-Dinitroanthrachinon-2-carbonsäure mit Schwefelsesquioxid (DE—OS 25 41 800). Die Ausgangsstoffe beider Verfahren sind nur durch mehrstufige Synthesen darstellbar.

Im Gegensatz dazu ist bei dem Verfahren der vorliegenden Anmeldung der Ausgangsstoff, 1-Nitroanthrachinon-2-carbonsäure, aus 1-Nitro-2-methylanthrachinon leicht zugänglich. Durch die einfache Herstellbarkeit der Ausgangsverbindung und durch das erfindungsgemässe Verfahren, Reduktion und gleichzeitig selektive Aminierung, wird ein gegenüber dem Stand der Technik wirtschaftlicheres Verfahren ermöglicht.

In den folgenden Beispielen bedeuten die Teile, sofern nicht anders angegeben, Gewichtsteile und die Prozente Gewichtsprozente; die Temperaturen sind in Celsiusgraden angegeben, Gewichtsteile stehen zu Volumteilen wie Gramm zu Milliliter.

### Beispiel 1

10 Teile 1-Nitroanthrachinon-2-carbonsäure und 10 Teile Hydroxylaminhydrochlorid werden in 60 Teilen Aethanol und 100 Teilen 4n-Natronlauge bei Raumtemperatur suspendiert. Die Mischung wird 3 Stunden am Rückfluss gekocht, dann auf Raumtemperatur abgekült, mit Wasser verdünnt und mit Salzsäure angesäuert. Die Mischung wird filtriert, und das Nutschgut wird mit Wasser neutral gewaschen und getrocknet. Man erhält nach dem Aufarbeiten 7,5 Teile 1,4-Diaminoanthrachinon-2-carbonsäure. Nach Umkristallisieren aus Alkohol erhält man eine analysenreine Probe mit einem Schmelzpunkt von etwa 352°C.

### Beispiel 2

10 Teile 1 - Nitroanthrachinon - 2 - carbonsäure und 10 Teile Hydroxylaminhydrochlorid werden in 60 Teilen Methanol und 100 Teilen 4n-Natronlauge bei Raumtemperatur suspendiert. Die Mischung wird 3 Stunden am Rückfluss gekocht, dann auf Raumtemperatur abgekühlt, mit Wasser verdünnt und mit Salzsäure angesäuert. Die Mischung wird filtriert, und das Nutschgut wird mit Wasser neutral gewaschen und getrocknet. Man erhält nach dem Aufarbeiten 7,6 Teile 1,4-Diaminoanthrachinon-2-carbonsäure.

### Beispiel 3

10 Teile 1-Nitro-2-carbamoylanthrachinon und 10 Teile Hydroxylaminhydrochlorid werden in 60 Teilen Aethanol und 100 Teilen 4n-Natronlauge bei Raumtemperatur suspendiert. Die Mischung wird 3 Stunden am Rückfluss gekocht, dann auf Raumtemperatur abgekühlt, mit Wasser verdünnt und mit Salzsäure angesäuert. Die Mischung wird filtriert, und das Nutschgut wird mit Wasser neutral gewaschen und getrocknet. Man erhält nach dem Aufarbeiten 7,0 Teile 1,4-Diaminoanthrachinon-2-carbonsäure.

### Beispiel 4

10 Teile 1-Nitro-2-carbamoylanthrachinon und 10 Teile Hydroxylaminhydrochlorid werden in 60 Teilen Methanol und 100 Teilen 4n-Natronlauge bei Raumtemperatur suspendiert. Die Mischung wird 3 Stunden am Rückfluss gekocht, dann auf Raumtemperatur abgekühlt, mit Wasser verdünnt und mit Salzsäure angesäuert. Die Mischung wird filtriert, und das Nutschgut wird mit Wasser neutral gewaschen und getrocknet. Man erhält nach dem Aufarbeiten 7,1 Teile 1,4-Diaminoanthrachinon-2-carbonsäure.

### Beispiel 5

10 Teile 1-Nitro-2-N-äthylcarbamoylanthrachinon und 10 Teile Hydroxylaminhydrochlorid werden in 60 Teilen Aethanol und 100 Teilen 4n-Natronlauge bei Raumtemperatur suspendiert. Die Mischung wird 3 Stunden am Rückfluss gekocht, dann auf Raumtemperatur abgekühlt, mit Wasser verdünnt und mit Salzsäure angesäuert. Die Mischung wird filtriert, und das Nutschgut wird mit Wasser neutral gewaschen und getrocknet. Man erhält nach dem Aufarbeiten 7,0 Teile 1,4-Diaminoanthrachinon-2-carbonsäure.

### Beispiel 6

10 Teile 1-Nitro-2-N-äthylcarbamoylanthrachinon und 10 Teile Hydroxylaminhydrochlorid werden in 60 Teilen Methanol und 100 Teilen 4n-Natronlauge bei Raumtemperatur suspendiert. Die Mischung wird 3 Stunden am Rückfluss gekocht, dann auf Raumtemperatur abgekühlt, mit Wasser verdünnt und mit Salzsäure angesäuert. Die Mischung wird filtriert, und das Nutschgut wird mit Wasser neutral gewaschen und getrocknet. Man erhält nach dem Aufarbeiten 7,0 Teile 1,4-Diaminoanthrachinon-2-carbonsäure.

Verwendet man in den oben gegebenen Beispielen statt der 100 Teile 4n-Natronlauge die gleiche Menge 4n-Kalilauge, so erhält man die gleichen Endprodukte in gleich guten Ausbeuten.

### Beispiel 7

10 Teile 1-Nitroanthrachinon-2-carbonsäure und 12 Teile Hydroxylammoniumsulfat werden in 60 Teilen Isopropanol und 100 Teilen 4n-Natronlauge bei Raumtemperatur suspendiert.

Die Mischung wird 3 Stunden am Rückfluss gekocht, dann auf Raumtemperatur abgekühlt, mit Wasser verdünnt und mit Salzsäure angesäuert. Die Mischung wird filtriert, und das Nutschgut wird mit Wasser neutral gewaschen und getrocknet. Man erhält nach dem Aufarbeiten 7,0 Teile 1,4-Diaminoanthrachinon-2-carbonsäure.

Verwendet man statt 1-Nitroanthrachinon-2-carbonsäure die gleiche Menge 1-Nitroanthrachinon-2-carbonsäure-methyl-, -äthyl-, -butyl- oder -phenyl-Ester, so erhält man die gleichen Endprodukte in gleich guten Ausbeuten.

Verwendet man statt Isopropanol die gleiche Menge Propanol, so erhält man das gleiche Endprodukt in gleich guter Ausbeute.

Die Identität der gemäss den Beispielen 1 bis 7 erhaltenen Produkte wurde durch Vergleich mit im Handel erhältlicher, analysenreiner 1,4-Diaminoanthrachinon-2-carbonsäure sichergestellt. Der Vergleich mit der Handelsware erfolgte durch Dünnschichtchromatographie mit verschiedenen Fliessmitteln. Ferner wurden Proben der Endprodukte von mehreren Beispielen aus Aethanol umkristallisiert und der Elementaranalyse unterworfen. Die Ergebnisse der Elementaranalyse ergaben die Summenformel der 1,4-Diaminoanthrachinon-2-carbonsäure und bestätigten somit den mittels Dünnschichtchromatographie gewonnenen Befund.

### Patentansprüche

1. Verfahren zur Herstellung von 1,4-Diaminoanthrachinon-2-carbonsäure, dadurch gekennzeichnet, dass man 1-Nitroanthrachinon-2-carbonsäure oder -carbonsäurederivate mit Hydroxylamin oder Hydroxylaminderivaten in Alkohol-Wasser-Mischungen bei basischen pH-Werten umsetzt und das Verfahrensprodukt in an sich bekannten Weise abtrennt.

2. Verfahren gemäss Anspruch 1, dadurch gekennzeichnet, dass man Hydroxylaminhydrochlorid verwendet.

3. Verfahren gemäss einem der Ansprüche 1 und 2, dadurch gekennzeichnet, dass man den pH-Wert durch Zugabe von Alkalimetallhydroxid einstellt.

4. Verfahren gemäss einem der Ansprüche 1 bis 3, dadurch gekennzeichnet, dass man die Umsetzung in Methanol-Wasser- oder Aethanol-Wasser-Mischungen vornimmt.

5. Verfahren gemäss einem der Ansprüche 1 bis 4, dadurch gekennzeichnet, dass man 1-Nitroanthrachinon-2-carbonsäure als Ausgangssubstanz verwendet.

6. Verfahren gemäss einem der Ansprüche 1 bis 4, dadurch gekennzeichnet, dass man 1-Nitro-2-carbamoylanthrachinon als Ausgangssubstanz verwendet.

7. Verfahren gemäss einem der Ansprüche 1 bis 4, dadurch gekennzeichnet, dass man 1-Nitro-2-N-äthylcarbamoylanthrachinon als Ausgangssubstanz verwendet.

### Claims

1. A process for the manufacture of 1,4-diaminoanthraquinone-2-carboxylic acid, characterised in that 1-nitroanthraquinone-2-carboxylic acid or a derivative thereof is reacted with hydroxylamine or a derivative thereof, in alcohol/water mixtures at basic value pH values, and the reaction product is isolated in a manner which is known per se.

2. A process according to claim 1, characterised by the use of hydroxylamine hydrochloride.

3. A process according to either of claims 1 or 2, characterised in that the pH value is adjusted by addition of an alkali metal hydroxide.

4. A process according to any one of claims 1 to 3, characterised in that the reaction is carried out in mixtures of methanol and water or ethanol and water.

5. A process according to any one of claims 1 to 4, characterised in that 1-nitroanthraquinone-2-carboxylic acid is used as starting material.

6. A process according to any one of claims 1 to 4, characterised in that 1-nitro-2-carbamoylanthraquinone is used as starting material.

7. A process according to any one of claims 1 to 4, characterised in that 1-nitro-2-N-ethylcarbamoylanthraquinone is used as starting material.

**Revendications**

1. Procédé pour la préparation de l'acide 1,4-diamino-anthraquinone-2-carboxylique, caractérisé par le fait qu'on fait réagir l'acide 1-nitro-anthraquinone-2-carboxylique ou des dérivés de l'acide - 1-nitro-anthraquinone-2-carboxylique avec l'hydroxylamine ou des dérivés de l'hydroxylamine dans des mélanges alcool-eau, à des valeurs de pH basiques, et qu'on sépare le produit de l'opération de façon connue en soi.

2. Procédé selon la revendication 1, caractérisé par le fait qu'on utilise le chlorhydrate d'hydroxylamine.

3. Procédé selon l'une des revendications 1 et 2, caractérisé par le fait qu'on règle la valeur du pH par addition d'hydroxyde de métal alcalin.

4. Procédé selon l'une quelconque des revendications 1 à 3, caractérisé par le fait qu'on effectue la réaction dans des mélanges méthanol-eau ou éthanol-eau.

5. Procédé selon l'une quelconque des revendications 1 à 4, caractérisé par le fait qu'on utilise l'acide, 1-nitroanthraquinone-2-carboxylique comme substance de départ.

6. Procédé selon l'une quelconque des revendications 1 à 4, caractérisé par le fait qu'on utilise la 1-nitro-2-carbamoylanthraquinone comme substance de départ.

7. Procédé selon l'une quelconque des revendications 1 à 4, caractérisé par le fait qu'on utilise la 1-nitro-2-N-éthylcarbamoylanthraquinone comme substance de départ.